# EUROPEAN PATENT SPECIFICATION

(11) **EP 3 984 674 B1**
(45) Date of publication and mention of the grant of the patent: **09.12.2026**
(21) Application number: 21203183.5
(22) Date of filing: 18.10.2021
(51) Int. Cl.: B23D 45/12, B23D 57/00

(54) **DEVICE FOR FRAGMENTING LARGE CYLINDRICAL CONTAINER**
VORRICHTUNG ZUM ZERKLEINERN GROSSER ZYLINDRISCHER BEHÄLTER
DISPOSITIF DE FRAGMENTATION DE GRANDS RÉCIPIENTS CYLINDRIQUES

(30) Priority: 19.10.2020 SK 501092020 U
(43) Date of publication of application: 20.04.2022
(73) Proprietor: Technická Univerzita V Kosiciach, 04200 Kosice-Sever (SK); Vuje, A.S., 918 64 Trnava (SK)
(72) Inventor: Vargovcík, Ladislav, 04011 Kosice (SK); Varga, Jozef, 04011 Ko ice (SK); Vrabel , Marek, 08006 Presov - Nizná Sebastová (SK); Stubna, Marián, 91701 Trnava (SK); Kravárik, Kamil, 91925 Súrovce (SK); Ondra, Frantisek, 90081 Senkvice (SK)

(56) References cited:
- EP-A1- 2 979 803
- WO-A1-2016/032122
- CN-A- 107 876 874
- GB-A- 907 969
- LINDSTROM A ET AL: "New Treatment Concept For Steam Generators Technical Aspects", 1 February 2007 (2007-02-01), pages 1 - 9, XP009533967, Retrieved from the Internet <URL:http://archive.wmsym.org/2007/pdfs/7131.pdf>
- KRAUSE GREGOR ET AL: "Options for Steam Generator Decommissioning (Presentation)", 22 February 2016 (2016-02-22), pages 1 - 32, XP009533968, Retrieved from the Internet <URL:https://www.oecd-nea.org/rwm/wpdd/predec2016/docs/S-4-5___ppt__ROBINSON__.pdf>
- KRAUSE GREGOR ET AL: "Abstr. 16242: Options for Steam Generator Decommissioning (Paper)", 22 February 2016 (2016-02-22), pages 1 - 10, XP009533970, Retrieved from the Internet <URL:https://www.oecd-nea.org/rwm/wpdd/predec2016/docs/S-4-5___FP__ROBINSON__.pdf>

## Description

### Field of invention

The invention can be classified in the field of production technology, automation technology.

### Background to the invention

Currently, the following methods of fragmentation of large cylindrical containers are recorded:
In the case of uncontaminated containers (usually conventional heat exchangers), the most effective is the fragmentation of the thick-walled casing by flame (acetylene-oxygen, etc.). In the case of contaminated containers (mainly steam generators (SG) of nuclear power plants), either in the shell area or in its vicinity/inside, where there is a risk of contamination spreading into the environment, only so-called cold technologies such as sawing (band saw, circular saw, wire saw) or milling (disc cutter, cylindrical cutter, shank cutter) can be considered.

Large band saws, which have a cutting width greater than the diameter of the container, i.e. sufficient to cut the entire ring in one cut, are commonly used Although this technology allows a high degree of automation, the feed rate is too low. ("New Treatment Concept For Steam Generators Technical Aspects", WM'07 Conference, 02/2007, Tucson, AZ and "Options for Steam Generator Decommissioning", PREDEC 2016 conference, 02/2016, Lyon, France).

Also commonly used is a disc cutter milling technology, which is part of a cutting module that provides rotation and feed of the cutter. The module is housed in a guide of a specific length, with a drive providing the movement of the module within the specified length. The feed rate is satisfactory in this case, but once the container casing has been cut within the length of the line, it is necessary to move the whole assembly to the next position, which represents both a delay and the presence of the operator in a contaminated environment.

A similar system, but with a shank or cylindrical cutter as the tool, is commonly used. It combines the said system with a band saw for crosscuts in the upper part of the SG casing.

This combines the disadvantages of the two previous technologies, i.e. low productivity and increased need for operators to be present during the operation.

A device as per the preamble of the appended claim is disclosed by EP2979803A1.

### Summary of the invention

The proposed technical solution minimises the shortcomings of the existing solutions, i.e. increases productivity and minimises the presence of operators in the contaminated environment.

The proposed device comprises the combination of features of the appended claim. The device comprises a circular guide encircling the container casing around its entire circumference, which is mounted in a separate frame that is able to move independently along the container casing.

One or more cutting modules with milling cutting discs are moved on the circular guide, providing both the required cutting disc movements (e.g. longitudinal feed, in-feed) and module movement along the circular guide. In the proposed invention, a crosscutting module is described. The longitudinal cutting module comprises classical design solutions that are part of the state of the art.

This arrangement allows a continuous cut to be made around the entire perimeter of the casing, thereby separating the entire ring without operator intervention in a contaminated environment. Additionally, this allows for automated or remotely controlled movement of the frame with the cutting modules in the direction of the SG axis towards the following cut.

### Brief description of the drawings

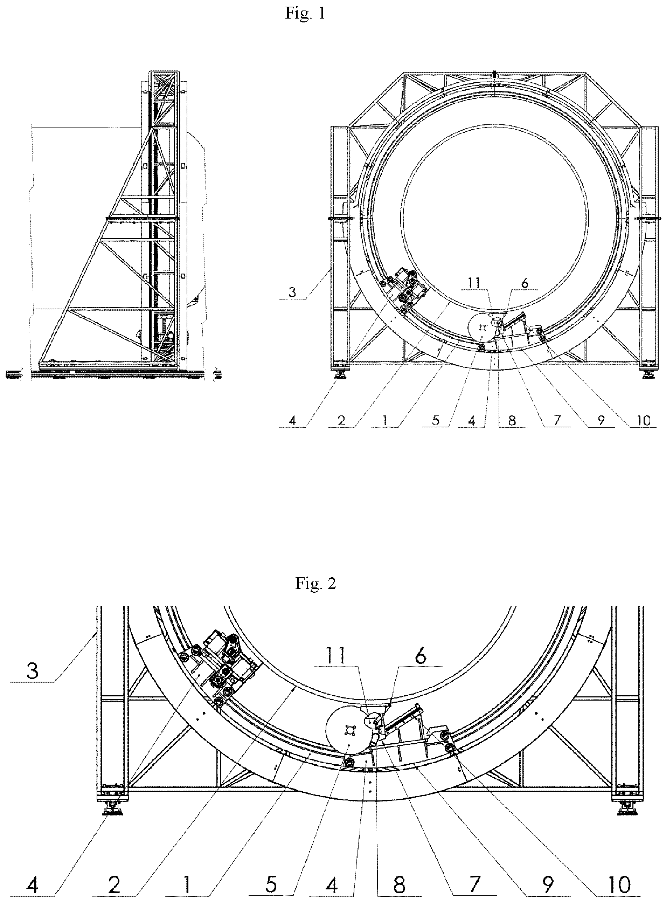

The invention is explained in more detail by means of drawings, with Fig. 1 showing the design of the device for fragmenting large cylindrical container. Fig. 2 shows the device for fragmenting large cylindrical container with a detail of the cutting modules.

### Detailed description

The figure shows an example of implementation of the proposed invention. It is a prototype of the device designed for fragmentation of steam generators in a nuclear power plant.

The device comprises a circular guide 1 encircling the container 2 casing, mounted in a separate frame 3 of closed profiles, equipped with four wheels for movement in the direction of the axis of the steam generator. The circular guide 1 comprises an internal ring gear. Two cutting modules 4 with milling cutting discs 5 connected to a gearbox with an electric motor are movably mounted on the circular guide 1. The cutting module 4 consists of two parts, of which the lower part 9 carries a drive terminated with a pinion engaging the ring gear and pulleys encircling the circular guide 1. The second, upper part 11 carrying the cutting disc 5 with the drive, is movably attached via rolling segments on an inclined guide 10 connected to the lower part and inclined relative to the tangent to the circular guide 1 on the frame by a certain angle. It is connected to the first part via a linear drive. An arm 6 is pivotally mounted on the cutting module 4, pressed against the surface of the container 2 by a spring integrated in the position sensor 8.

The position sensor 8 senses the angle of rotation of the arm 6 corresponding to the distance of the cutting disc 5 from the surface of the casing, which is the input information for controlling the immersion of the cutting disc 5 in the casing of the container 2.

It is possible to move the support frame 3 along the container 2 on rails independently thereof.

The inclined guide 10 and the drive in the modules ensure the feed of the cutting disc 5 into the cut. A pinion drive provides for movement of the module along the circular guide 1.

The arm 6 provides sensing and maintenance of the required depth of cut. A cover 7 of the cutting disc 5 with a side connection for vacuum extraction is used for controlled removal of metal chips.

### Industrial applicability

The device for fragmenting large cylindrical container is applicable mainly in the disposal of steam generators and other thick-walled containers in decommissioned nuclear power plants, but also in the disposal of large heat exchangers contaminated by chemicals, the dispersion of which into the air would be health or life threatening.

## Claims

1. Device for fragmenting large cylindrical container, comprising a circular guide (1) for encircling the container (2) casing around its entire circumference, mounted in a separate support frame (3), wherein the circular guide (1) comprises a ring gear and at least one cutting module (4) with a milling cutting disc (5) connected to a gearbox with an electric motor, **characterised in that** the separate support frame (3) is equipped with at least one wheel for movement in the direction of the axis of the container (2), **in that** the ring gear is an internal ring gear and **in that** an arm (6) is pivotally mounted on the cutting module (4) and is pressed against the surface of the large container (2) by a spring integrated in a position sensor (8) mounted in the axis of rotation of the arm (6).

## Patentansprüche

1. Vorrichtung zum Zerlegen eines großen zylindrischen Behälters, umfassend eine kreisförmige Führung (1), zum Umschließen des Mantels des Behälters (2) über seinen gesamten Umfang, die in einem separaten Tragrahmen (3) gelagert ist, wobei die kreisförmige Führung (1) einen Zahnkranz und mindestens ein Schneidmodul (4) mit einer Frässchneidscheibe (5) umfasst, die mit einem Getriebe mit einem Elektromotor verbunden ist, **dadurch gekennzeichnet, dass** der separate Tragrahmen (3) mit mindestens einem Rad zur Bewegung in Richtung der Achse des Behälters (2) ausgestattet ist, dass der Zahnkranz ein Innenzahnkranz ist und dass an dem Schneidmodul (4) ein Arm (6) schwenkbar gelagert ist, der durch eine Feder, die in einen in der Drehachse des Arms (6) angebrachten Positionssensor (8) integriert ist, gegen die Oberfläche des großen Behälters (2) gedrückt wird.

## Revendications

1. Dispositif de fragmentation d'un grand conteneur cylindrique, comprenant un guide circulaire (1) à entourer l'enveloppe du conteneur (2) sur toute sa circonférence, monté dans un cadre support séparé (3), dans lequel le guide circulaire (1) comprend une couronne dentée et au moins un module de coupe (4) doté d'un disque de coupe de fraisage (5) relié à un réducteur muni d'un moteur électrique, **caractérisé en ce que** le cadre support séparé (3) est équipé d'au moins une roue permettant un déplacement dans la direction de l'axe du conteneur (2), **en ce que** la couronne dentée est une couronne à denture intérieure et **en ce qu'**un bras (6) est monté pivotant sur le module de coupe (4) et est pressé contre la surface du grand conteneur (2) par un ressort intégré dans un capteur de position (8) monté dans l'axe de rotation du bras (6).
